# FASCICULE DE BREVET EUROPEEN

(11) **EP 0 725 209 B1**
(45) Date de publication et mention de la délivrance du brevet: **12.01.2000**
(21) Numéro de dépôt: 96400224.0
(22) Date de dépôt: 01.02.1996
(51) Int. Cl.: F02C 7/28, F02K 1/80

(54) **Dispositif d'étanchéité entre une entrée d'air et un carter de soufflante de turboréacteur à double flux**
Abdichtung zwischen dem Lufteinlass und dem Bläsergehäuse eines Zweikreistriebswerks
Sealing ring between an air inlet and a fan shroud of a fan engine

(30) Priorité: 03.02.1995 FR 9501272
(43) Date de publication de la demande: 07.08.1996
(73) Titulaire: AEROSPATIALE Société Nationale Industrielle, 75781 Paris Cédex 16 (FR)
(72) Inventeur: Porte, Alain, F-31770 Colomiers (FR); Marche, Hervé, F-31120 Roquettes (FR)
(74) Mandataire: Dubois-Chabert, Guy

(56) Documents cités:
- EP-A- 0 489 653
- DE-A- 1 751 550
- FR-A- 1 452 652
- GB-A- 722 616
- US-A- 4 022 948
- US-A- 4 645 217

## Description

L'invention concerne un dispositif d'étanchéité conçu pour être placé entre une bouche d'entrée d'air et un carter de soufflante d'un turboréacteur à double flux, notamment lorsque ces structures sont appelées à subir des déplacements relatifs, par exemple sous l'effet de charges aérodynamiques et inertielles appliquées sur le réacteur lors de certaines phases du vol d'un aéronef.

Un tel dispositif peut être utilisé sur tous les turboréacteurs à double flux équipant les aéronefs. En effet, s'il est particulièrement adapté au cas où la bouche d'entrée d'air n'est pas directement fixée à l'avant du carter de soufflante, le dispositif d'étanchéité selon l'invention peut aussi être utilisé sur les turboréacteurs dans lesquels une telle fixation directe existe.

Dans un turboréacteur à double flux, la partie centrale du moteur comporte, de l'avant vers l'arrière, un compresseur, une chambre de combustion et une turbine haute pression entraînant le compresseur. Ces différents composants sont placés dans un carter central qui contient en outre, derrière la turbine haute pression, une turbine basse pression entraînant une soufflante placée à l'avant du compresseur. La soufflante est montée dans un carter de soufflante relié à la partie centrale du moteur par un ou deux jeux de bras orientés radialement par rapport à l'axe longitudinal de cette partie centrale. La soufflante crée un flux d'air secondaire dans un canal de soufflante, de forme annulaire, délimité entre le carter central et une nacelle qui entoure la partie centrale du moteur sur la majeure partie de sa longueur.

En partant de l'avant, la nacelle d'un turboréacteur à double flux comprend habituellement un caisson profilé formant la bouche d'entrée d'air du réacteur, une partie intermédiaire dont l'enveloppe intérieure est formé sur le carter de soufflante et une partie arrière constituée de capots articulés permettant d'accéder à la partie centrale du moteur. Généralement, la partie intermédiaire de la nacelle comprend également des capots extérieurs articulés permettant d'accéder à des équipements logés dans cette partie intermédiaire de la nacelle.

Sur la plupart des turboréacteurs existants, la bouche d'entrée d'air est fixée à l'avant du carter de soufflante par des boulons qui traversent des brides formées sur chacune de ces structures.

Il existe toutefois certains réacteurs dans lesquels la bouche d'entrée d'air est dissociée du carter de soufflante. C'est notamment le cas du moteur central équipant les avions DC10 et MD11. Par ailleurs, il est également envisagé, dans le cas de moteurs suspendus à un élément de voilure par un mât, de ne pas fixer la bouche d'entrée d'air sur le carter de soufflante mais directement sur le mât.

Lorsque la structure de la bouche d'entrée d'air est dissociée de l'extrémité avant de la structure du carter de soufflante, des déplacements relatifs entre ces deux structures sont possibles. En particulier, les charges aérodynamiques et inertielles qui sont appliquées radialement sur la surface extérieure de la nacelle, notamment à l'atterrissage et au décollage des aéronefs ainsi que lors des changements de cap, se traduisent par des décalages de l'axe de la bouche d'entrée d'air par rapport à l'axe du carter de soufflante. Ces décalages se produisent selon des directions orientées radialement par rapport aux axes des deux structures et qui varient selon la nature des charges appliquées sur la nacelle. Par conséquent, un dispositif assurant l'étanchéité ainsi que la continuité aérodynamique à l'intérieur de la nacelle doit être prévu entre les deux structures.

Sur les moteurs centraux existants dans lesquels la bouche d'entrée d'air est dissociée du carter de soufflante, l'étanchéité est assurée par un joint en matériau élastomère, à section en forme d'Ω, dont chacune des extrémités est fixée respectivement sur la bouche d'entrée d'air et sur le carter de soufflante. En complément, un joint à lèvre est fixé sur la bouche d'entrée d'air, à l'intérieur du joint en forme d'Ω, de façon à être en contact avec la surface intérieure de l'extrémité avant du carter de soufflante, pour assurer la continuité aérodynamique à l'intérieur de la nacelle.

Cette solution connue présente différents inconvénients.

En premier lieu, les parties du joint en forme d'Ω qui sont situées dans un plan perpendiculaire au plan de déplacement relatif entre les deux structures subissent des plissements qui réduisent sensiblement la durée de vie de ce joint.

Par ailleurs, du fait que le joint à section en forme d'Ω est fixé sur les deux structures, il doit être démonté à chaque fois que la bouche d'entrée d'air doit être déposée, par exemple pour procéder à un remplacement du moteur. La durée d'immobilisation de l'aéronef s'en trouve alors augmentée.

Enfin, les fonctions d'étanchéité et de continuité aérodynamique sont assurées par deux organes distincts, ce qui en augmente le coût.

Dans le document DE-A-1 751 550, qui illustre le préambule de la revendication 1, l'étanchéité est assurée par un joint gonfflable.

L'invention a précisément pour objet un dispositif d'étanchéité conçu pour être placé entre une bouche d'entrée d'air et un carter de soufflante, sur un turboréacteur à double flux, sans que des déplacements relatifs entre les deux structures n'entraînent des plissements susceptibles de réduire la durée de vie du dispositif.

L'invention a aussi pour objet un dispositif d'étanchéité dont la dépose n'est pas nécessaire lors d'un remplacement du moteur, de façon à réduire la durée d'immobilisation de l'aéronef.

Enfin, l'invention a également pour objet un dispositif d'étanchéité formé d'un organe unique permettant d'assurer à la fois l'étanchéité et la continuité aérodynamique à l'intérieur de la nacelle.

Conformément à l'invention, ce résultat est obtenu au moyen d'un dispositif d'étanchéité entre une bouche d'entrée d'air et un carter de soufflante de turboréacteur à double flux, comprenant un manchon élastique dont une première partie d'extrémité est fixée sur un premier des organes constitués par l'entrée d'air et le carter de soufflante et caractérisé par le fait qu'une deuxième partie d'extrémité est emmanchée sur une surface extérieure d'une partie adjacente du deuxième organe, de telle sorte que le diamètre au repos de la deuxième partie d'extrémité du manchon soit inférieur au diamètre de la surface extérieure de ladite partie adjacente, un moyen anti-plissement du manchon étant prévu pour empêcher un déplacement circonférentiel relatif entre les deux parties d'extrémités du manchon.

Dans une forme de réalisation préférentielle de l'invention, le moyen anti-plissement comprend un insert en forme de peigne, noyé dans le manchon, comportant des lames flexibles régulièrement réparties sur la circonférence du manchon, orientées selon des génératrices du manchon, et un talon annulaire portant les lames flexibles et noyé dans la première partie d'extrémité du manchon.

Avantageusement, cet insert en forme de peigne est réalisé en acier à ressort.

Dans certaines formes de réalisation de l'invention, un organe gonflable peut être associé au manchon élastique, autour de la deuxième extrémité du manchon.

Avantageusement, l'organe gonflable est alors solidaire du manchon, ce qui permet notamment d'utiliser cet organe pour augmenter le diamètre de la deuxième extrémité du manchon lorsqu'on désire procéder à la dépose du moteur.

Afin que la pression appliquée par l'organe gonflable sur la deuxième extrémité du manchon soit fournie directement par la soufflante, un passage peut mettre en communication cet organe gonflable avec le canal de soufflante du turboréacteur, en aval de la soufflante.

Dans la forme de réalisation préférentielle de l'invention, la première extrémité du manchon est fixée sur la bouche d'entrée d'air et le manchon est réalisé en élastomère.

On décrira à présent, à titre d'exemple non limitatif, une forme de réalisation préférentielle de l'invention, en se référant aux dessins annexés, dans lesquels :
- la figure 1 est une vue de côté, en coupe partielle, illustrant de façon très schématique un turboréacteur à double flux équipé d'un dispositif d'étanchéité conforme à l'invention ;
- la figure 2 est une vue en coupe transversale illustrant à plus grande échelle le dispositif d'étanchéité équipant le réacteur de la figure 1 ; et
- la figure 3 est une vue en perspective, avec arrachement partiel, représentant une partie du manchon élastique du dispositif d'étanchéité de la figure 2.

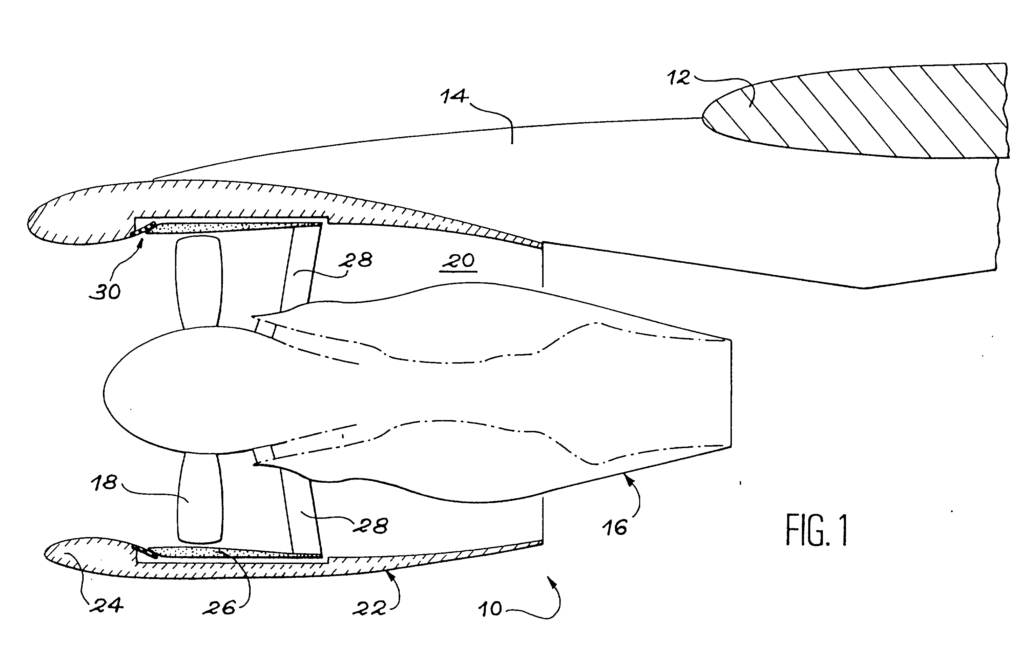

Sur la figure 1, on a représenté de façon très schématique un turboréacteur à double flux 10 suspendu à un élément de voilure 12 d'un aéronef par un mât 14.

La partie centrale du réacteur 10, désignée de façon générale par la référence 16, présente une structure conventionnelle. Dans un but de clarification, elle n'a donc pas été illustrée en détail sur la figure 1. Pour faciliter la compréhension, on rappellera simplement ici que cette partie centrale 16 comprend, en partant de l'avant, un compresseur, une chambre de combustion, une turbine haute pression et une turbine basse pression. Cette dernière entraîne en rotation une soufflante 18 placée à l'avant de la partie centrale 16. La soufflante 18 permet de créer un flux d'air secondaire dans un canal de soufflante 20, de forme annulaire, délimité entre la partie centrale 16 et une nacelle 22 entourant coaxialement cette partie centrale.

La partie avant de la nacelle 22 constitue une bouche d'entrée d'air 24 qui canalise le flux d'air entrant dans la nacelle 22 vers la soufflante 18. En arrière de la bouche d'entrée d'air 24, l'enveloppe intérieure de la nacelle 22 est formée par la surface intérieure d'un carter de soufflante 26. Ce carter de soufflante 26 entoure la soufflante 18 de façon à délimiter entre les extrémités des pales de cette dernière et le carter un jeu aussi faible que possible. Le carter de soufflante 26 est relié aux structures non tournantes de la partie centrale 16 du réacteur par au moins une série de bras 28 orientés radialement par rapport à l'axe longitudinal du réacteur.

Le reste de la structure de la nacelle 22 n'a pas été illustré en détail sur la figure 1. On rappellera simplement ici que l'enveloppe extérieure de la nacelle 22 est généralement formée, autour du carter de soufflante 26, par deux capots extérieurs articulés directement sur le mât 14 et permettant d'accéder à des équipements installés dans la partie intermédiaire de la nacelle 22. En outre, la partie arrière de la nacelle 22 est généralement formée de deux capots à section en forme de C, également articulés sur le mât 14 et permettant d'accéder à la partie centrale 16 du réacteur.

Comme on l'a illustré sur la figure 1, l'invention s'applique préférentiellement aux turboréacteurs à double flux dans lesquels il n'existe pas de liaison mécanique directe entre l'extrémité avant du carter de soufflante 26 et la bouche d'entrée d'air 24. Cette situation se produit notamment lorsque l'ensemble de la nacelle 22 est supporté directement par le mât 14 tandis que le carter de soufflante 26 est supporté par le mât 14 au travers des bras 28 et de la structure non tournante de la partie centrale 16 du réacteur 10.

Dans ces conditions, il peut se produire entre la nacelle 22 et le carter de soufflante 26 des déplacement relatifs selon des directions orientées radialement par rapport à l'axe longitudinal du moteur. De tels déplacements peuvent notamment être provoqués par les charges aérodynamiques et inertielles qui sont appliquées sur la nacelle 22 lors de certaines phases de vol de l'aéronef telles que l'atterrissage, le décollage et les changements de cap.

La prise en compte de ces déplacements relatifs entre la nacelle 22 et le carter de soufflante 26 conduit à placer un dispositif d'étanchéité 30 dans le canal de soufflante 20, entre la bouche d'entrée d'air 24 et l'extrémité avant du carter de soufflante 26. En plus de sa fonction d'étanchéité, ce dispositif 30 assure la continuité aérodynamique de l'enveloppe intérieure de la nacelle 22 dans la région située entre la bouche d'entrée d'air 24 et le carter de soufflante 26.

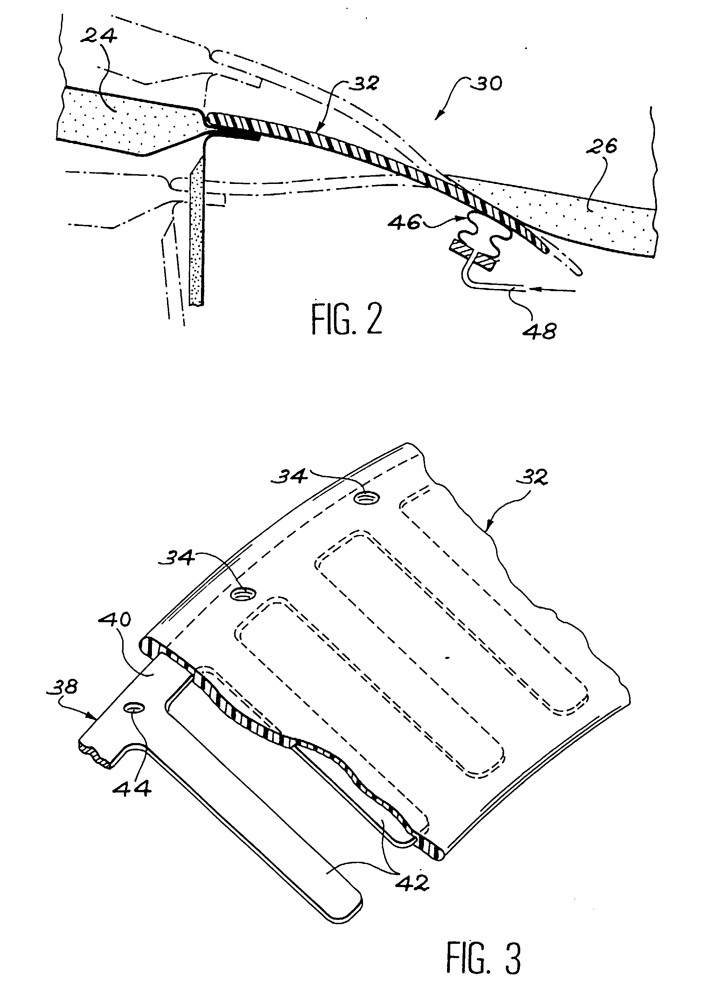

Conformément à l'invention, on utilise un dispositif d'étanchéité 30 présentant une structure originale qui va à présent être décrite en détail en se référant aux figures 2 et 3.

Ce dispositif d'étanchéité 30 comprend un manchon élastique 32 réalisé en un matériau élastomère tel que du caoutchouc et présentant en section une forme sensiblement rectiligne lorsqu'il est au repos.

Ce manchon élastique 32 est fixé à son extrémité avant sur la bouche d'entrée d'air 24 par des moyens de fixation (non représentés) tels que des boulons, des rivets, etc. régulièrement répartis sur toute la circonférence du manchon. Ces moyens de fixation traversent des trous 34 formés dans la partie avant du manchon 32, comme l'illustre la figure 3. Cette fixation est telle que le manchon élastique 32 prolonge vers l'arrière l'enveloppe intérieure de la bouche d'entrée d'air 24, pratiquement sans discontinuité, comme on le voit sur la figure 2.

Le manchon élastique 32 s'étend vers l'arrière au-delà du bord avant du carter de soufflante 26, de façon à être emmanché sur une partie avant de ce carter. Plus précisément, le diamètre au repos de la partie arrière du manchon élastique 32 est inférieur au diamètre extérieur de la partie avant du carter de soufflante 26, de telle sorte que cette partie arrière du manchon 32 soit en permanence appliquée élastiquement contre la surface extérieure de la partie avant du carter de soufflante 26.

Comme on l'a représenté en traits mixtes sur la figure 2, l'agencement qui vient d'être décrit permet à la partie arrière du manchon 32 de rester en permanence en contact étanche avec le carter de soufflante 26, malgré les déplacements relatifs qui peuvent se produire entre la bouche d'entrée d'air 24 et ce carter 26. L'étanchéité du canal de soufflante 20 ainsi que la continuité aérodynamique de l'enveloppe intérieure de la nacelle sont ainsi préservées.

Si l'on étudie plus attentivement les déformations du manchon 32 lors des déplacements relatifs entre la bouche d'entrée d'air 24 et le carter de soufflante 26, on observe que ces déformations entraînent un simple glissement relatif entre le manchon et la surface extérieure du carter de soufflante à proximité du plan de déplacement relatif entre les deux structures, c'est-à-dire sensiblement dans le plan de la figure 2. En revanche, dans le plan perpendiculaire à ce plan de déplacement relatif, le manchon est soumis dans son plan à des efforts de cisaillement qui risquent d'entraîner son plissement.

Pour remédier à cet inconvénient, il est prévu conformément à l'invention un moyen anti-plissement du manchon 32, conçu pour empêcher un déplacement circonférentiel relatif entre les deux extrémités du manchon, en tout point de sa circonférence.

Dans la forme de réalisation illustrée plus précisément sur la figure 3, ce moyen anti-plissement comprend un insert 38 noyé dans le manchon élastique 32. Cet insert 38 présente sensiblement la forme d'un peigne. Plus précisément, il est réalisé dans une lame de ressort, par exemple en acier à ressort, et comprend un talon annulaire 40 ainsi que des lames flexibles 42.

Le talon annulaire 40 est noyé dans la partie avant du manchon 32 fixée dans la bouche d'entrée d'air 24 et il s'étend sur toute la circonférence du manchon. Comme le montre la figure 3, ce talon annulaire 40 est situé en face des trous 34 par lesquels le manchon est fixé sur la bouche d'entrée d'air 24. Il comporte donc, en face de ces trous 34 des trous 44 pour le passage des moyens de fixation tels que des boulons ou des rivets, par lesquels le manchon est fixé sur la bouche d'entrée d'air.

Le talon annulaire 40 porte les lames flexibles 42 de telle sorte que ces dernières soient régulièrement réparties sur toute la circonférence du manchon. Les lames flexibles 42 sont orientées selon des génératrices du manchon 32 et se prolongent dans ce dernier jusque dans la partie arrière du manchon qui est emmanchée sur le carter de soufflante 26.

La présence de l'insert 38 dans le manchon élastique 32 autorise la flexion de ce dernier dans le plan de déplacement relatif entre les structures 24 et 26 comme l'illustre la figure 2. En revanche, les lames flexibles 42 empêchent la partie arrière du manchon 32 qui est reçue sur le carter de soufflante 26 de se déplacer circonférentiellement par rapport à la partie avant du manchon 32 qui est fixée sur la bouche d'entrée d'air 24, dans le plan perpendiculaire au plan de déplacement relatif précité. Tout plissement du manchon 32 risquant d'entraîner sa déchirure est ainsi empêché. La durée de vie du dispositif d'étanchéité 30 s'en trouve sensiblement augmentée par rapport à un manchon qui serait dépourvu de l'insert 38.

Le dispositif d'étanchéité selon l'invention permet en outre une dépose de la bouche d'entrée d'air 24, par exemple pour procéder au remplacement du moteur, sans qu'il soit nécessaire de démonter le manchon élastique 32.

Comme on l'a illustré en traits discontinus sur la figure 2, le dispositif d'étanchéité 30 selon l'invention peut également comprendre un organe annulaire gonflable 46 placé autour de la partie arrière du manchon 32 qui est reçue sur le carter de soufflante 26. Plus précisément, l'organe gonflable 46 est de préférence solidaire de la partie arrière du manchon 32.

L'organe gonflable 46 permet, si nécessaire, d'appliquer radialement la partie arrière du manchon 32 contre le carter de soufflante 26 avec une force accrue, par exemple pour garantir le maintien de l'étanchéité dans le cas où le gradient de pression de part et d'autre du manchon est excessif. Cette mise en pression de l'organe gonflable 46 peut notamment être obtenue en mettant en communication cet organe gonflable avec le canal de soufflante 20 (figure 1), en aval de la soufflante 18, par un passage 48.

Il est à noter que l'organe gonflable 46 peut aussi être utilisé pour dilater provisoirement l'extrémité arrière du manchon 32, lors du montage et du démontage de la bouche d'entrée d'air 24. A cet effet, l'organe gonflable 46 peut être relié par un autre passage (non représenté) à une source de vide.

Bien entendu, l'invention n'est pas limitée à la forme de réalisation qui vient d'être décrite, mais en couvre tous les équivalents techniques. Ainsi, au lieu d'être fixé sur la bouche d'entrée d'air et emmanché sur le carter de soufflante, le manchon 32 pourrait être fixé sur ce carter et emmanché sur une cloison prolongeant vers l'arrière l'enveloppe intérieure de la bouche d'entrée d'air.

## Revendications

1. Dispositif d'étanchéité entre une bouche d'entrée d'air (24) et un carter de soufflante (26) de turboréacteur à double flux comprenant un manchon élastique (32) dont une première partie d'extrémité est fixée sur un premier (24) des organes constitués par l'entrée d'air et le carter de soufflante et caractérisé par le fait qu'une deuxième partie d'extrémité est emmanchée sur une surface extérieure d'une partie adjacente du deuxième organe (26), de telle sorte que le diamètre au repos de la deuxième partie d'extrémité du manchon soit inférieur au diamètre de la surface exterieure ladite partie adjacente, un moyen anti-plissement (42) du manchon (32) étant prévu pour empêcher un déplacement circonférentiel relatif entre les deux parties d'extrémités du manchon.

2. Dispositif d'étanchéité selon la revendication 1, caractérisé par le fait que le moyen anti-plissement comprend un insert (38) en forme de peigne, noyé dans le manchon (32), comportant des lames flexibles (42) régulièrement réparties sur la circonférence du manchon, orientées selon des génératrices du manchon, et un talon annulaire (40) portant les lames flexibles (42) et noyé dans la première partie d'extrémité du manchon.

3. Dispositif d'étanchéité selon la revendication 2, caractérisé par le fait que l'insert (38) en forme de peigne est réalisé en acier à ressort.

4. Dispositif d'étanchéité selon l'une quelconque des revendications 1 à 3, caractérisé par le fait qu'il comprend un organe gonflable (46) entourant la deuxième partie d'extrémité du manchon (32).

5. Dispositif d'étanchéité selon la revendication 4, caractérisé par le fait que l'organe gonflable (46) est solidaire du manchon (32).

6. Dispositif d'étanchéité selon l'une quelconque des revendications 4 et 5, caractérisé par le fait que l'organe gonflable (46) communique par un passage (48) avec un canal de soufflante (20) du turboréacteur, en aval d'une soufflante (28).

7. Dispositif d'étanchéité selon l'une quelconque des revendications précédentes, caractérisé par le fait que la première partie d'extrémité du manchon (32) est fixée sur la bouche d'entrée d'air (24).

8. Dispositif d'étanchéité selon l'une quelconque des revendications précédentes, caractérisé par le fait que le manchon (32) est réalisé en élastomère.

## Patentansprüche

1. Abdichtungsvorrichtung zwischen einem Lufteinlaß (24) und einem Zweikreistriebwerks-Verdichtergehäuse (26), eine elastische Hülse (32) umfassend, von der ein Endteil an einem ersten (24) der durch den Lufteintritt und das Verdichtergehäuse gebildeten Elemente befestigt ist,
**dadurch gekennzeichnet,**
dass ein zweites Endteil auf eine Außenoberfläche eines benachbarten Teils des zweiten Elements (26) gesteckt wird, derart dass der Durchmesser des zweiten Endteils der Hülse im Ruhezustand kleiner ist als der Durchmesser der Außenoberfläche des genannten benachbarten Teils, wobei eine Anti-Faltungseinrichtung (42) der Hülse (32) vorgesehen ist, um eine Umfangs-Relativverschiebung zwischen den beiden Endteilen der Hülse zu verhindern.

2. Abdichtungsvorrichtung nach Anspruch 1, dadurch gekennzeichnet, dass die Anti-Faltungseinrichtung einen kammförmigen Einsatz (38) umfasst, eingebettet in die Hülse (32), mit gleichmäßig über den Umfang der Hülse verteilten flexiblen Lamellen (42), Mantellinien der Hülse entsprechend ausgerichtet, und einem die flexiblen Lamellen (42) tragenden ringförmigen Bund (40), eingebettet in den ersten Endteil der Hülse.

3. Abdichtungsvorrichtung nach Anspruch 2, dadurch gekennzeichnet, dass der kammförmige Einsatz (38) aus Federstahl hergestellt wird.

4. Abdichtungsvorrichtung nach einem der Ansprüche 1 bis 3, dadurch gekennzeichnet, dass sie ein aufblasbares Organ (46) umfasst, das den zweiten Endteil der Hülse (32) umgibt.

5. Abdichtungsvorrichtung nach Anspruch 4, dadurch gekennzeichnet, dass das aufblasbare Organ (46) fest mit der Hülse (32) verbunden ist.

6. Abdichtungsvorrichtung nach einem der Ansprüche 4 und 5, dadurch gekennzeichnet, dass das aufblasbare Organ (46) über eine Leitung (48) mit einem Verdichterkanal (20) des Strahltriebwerks kommuniziert, hinter einem Verdichterelement (28).

7. Abdichtungsvorrichtung nach einem der nachfolgenden Ansprüche, dadurch gekennzeichnet, dass der erste Endteil der Hülse (32) an der Lufteinlaßöffnung (24) befestigt ist.

8. Abdichtungsvorrichtung nach einem der nachfolgenden Ansprüche, dadurch gekennzeichnet, dass die Hülse (32) aus Elastomer hergestellt wird.

## Claims

1. Sealing device between an air inlet (24) and a fan frame (26) of a turbofan engine, comprising an elastic sleeve (32), whereof a first end part is fixed to a first (24) of the members constituted by the air inlet and the fan frame and characterized in that a second end part is fitted on an outer surface of an adjacent part of the second member (26), so that the inoperative state diameter of the second end part of the sleeve is smaller than the diameter of the outer surface of the said adjacent part, a means (42) for preventing wrinkling of the sleeve (32) being provided to prevent any relative circumferential displacement between the two end parts of the sleeve.

2. Sealing device according to claim 1, characterized in that the antiwrinkling means comprises a comb-shaped insert (38), embedded in the sleeve (32), having flexible leaves (42) regularly distributed on the circumference of the sleeve and oriented in accordance with the sleeve generatrixes, and an annular shoulder (40) carrying the flexible leaves (42) and embedded in the first end part of the sleeve.

3. Sealing device according to claim 2, characterized in that the comb-shaped insert (38) is made from spring steel.

4. Sealing device according to any one of the claims 1 to 3, characterized in that it comprises an inflatable member (46) surrounding the second end part of the sleeve (32).

5. Sealing device according to claim 4, characterized in that the inflatable member (46) is integral with the sleeve (32).

6. Sealing device according to either of the claims 4 and 5, characterized in that the inflatable member (46) communicates by a passage (48) with an engine fan duct (20) downstream of a fan (28).

7. Sealing device according to any one of the preceding claims, characterized in that the first end part of the sleeve (32) is fixed to the air inlet (24).

8. Sealing device according to any one of the preceding claims, characterized in that the sleeve (32) is made from elastomer.
